# FASCICULE DE BREVET EUROPEEN

(11) **EP 0 562 937 B1**
(45) Date de publication et mention de la délivrance du brevet: **20.12.1995**
(21) Numéro de dépôt: 93400729.5
(22) Date de dépôt: 22.03.1993
(51) Int. Cl.: B60N 2/22

(54) **Dossier de siège réglable**
Einstellbare Sitzrücklehne
Adjustable seat backrest

(30) Priorité: 25.03.1992 FR 9203601
(43) Date de publication de la demande: 29.09.1993
(73) Titulaire: BERTRAND FAURE AUTOMOBILE "B.F.A.", F-91300 Massy (FR)
(72) Inventeur: Bernard, Vincent, F-88650 Anould (FR)
(74) Mandataire: Picard, Jean-Claude Georges

(56) Documents cités:
- AU-B- 572 930
- DE-A- 2 740 055
- DE-B- 1 111 965
- GB-A- 2 231 257
- US-A- 4 531 779
- PATENT ABSTRACTS OF JAPAN vol. 007, no. 169 (M-231)26 Juillet 1983 &JP-A-58 073 446 (BUTSUSAN)

## Description

La présente invention concerne un dossier de siège, en particulier pour siège arrière de véhicule automobile, du type comportant une armature de dossier et une garniture, ladite armature possédant au moins un cadre mobile, associé à des moyens lui permettant d'être pivoté autour d'un axe horizontal.

Dans les automobiles, en particulier, le problème se pose de permettre aux passagers arrière, comme aux occupants de l'avant, de modifier l'inclinaison de l'appui de leur buste, par réglage de l'inclinaison de leur dossier. Pour ce faire, on peut envisager de permettre un réglage de l'inclinaison de l'armature de l'ensemble du dossier. Cependant une inclinaison entraînant un déplacement de la partie supérieure du dossier vers l'avant fait apparaître un espace entre le dossier et la tablette arrière du véhicule ainsi que les garnitures latérales, espace par lequel peuvent se propager dans l'habitacle les bruits provenant du train arrière et passant par le coffre du véhicule. Ceci nuit évidemment au confort des passagers.

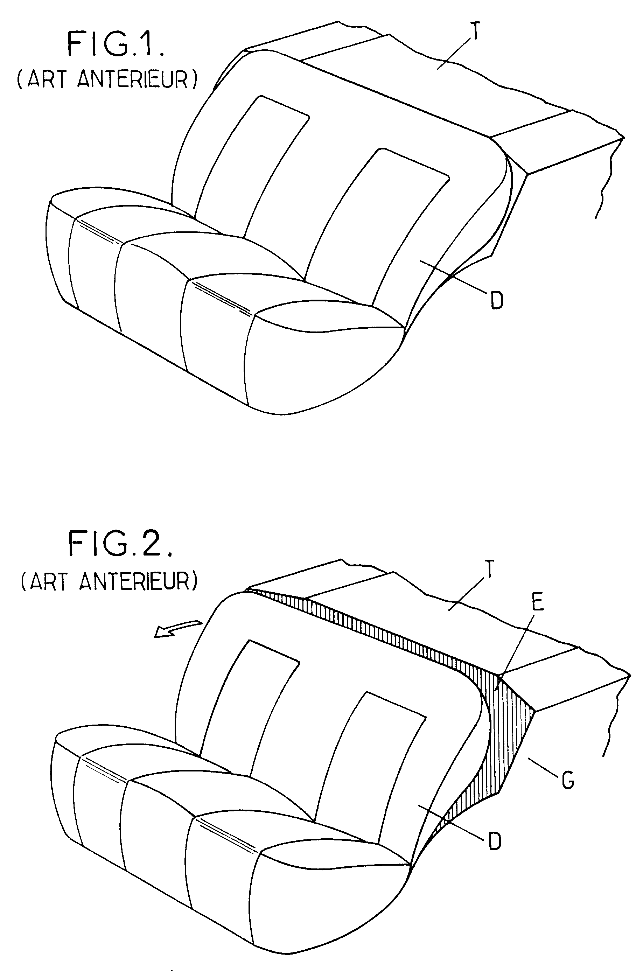

Sur la figure 1 du dessin ci-annexé on a représenté un tel dossier D en position reculée, et sur la figure 2 en position avancée. On a référencé E l'espace précité, créé dans cette dernière position entre le dossier D et la tablette arrière T d'une part, les garnitures latérales G d'autre part.

Recréer l'étanchéité acoustique dans ces conditions nécessiterait l'utilisation d'organes de réglage et de rattrapage de jeux, sur le siège ou les garnitures, qui serait coûteuse et assez peu efficace.

Le but de la présente invention est de résoudre ce problème, et à cet effet un dossier de siège réglable conforme à l'invention, du type mentionné au début, est caractérisé en ce que la garniture comporte une matelassure fixe munie d'au moins un évidement dans lequel se loge un coussin lié au cadre mobile, et en ce que ledit cadre de coussin possède un axe horizontal dont les extrémités sont montées pivotantes dans des paliers respectifs de ladite armature de dossier.

Ces dispositions pourront bien entendu être prévues pour tous les coussins du dossier, généralement au nombre de deux ou trois ; elles permettront donc à chaque passager de régler individuellement l'inclinaison de son coussin de dossier tout en maintenant fixe l'armature de l'ensemble du dossier ainsi que son garnissage, et en évitant donc l'apparition de l'espace mentionné plus haut. On pourra donc résoudre les problèmes d'étanchéité acoustique entre le coffre et l'habitacle par les moyens actuellement connus, lesquels donnent satisfaction techniquement et économiquement.

Pour le réglage de l'inclinaison des armatures de coussin, on pourra mettre en oeuvre tous moyens appropriés, par exemple un organe rotatif à surface d'appui excentrique propre à être manoeuvré par une poignée, et à agir sur un montant du cadre mobile de coussin, celui-ci étant soumis à l'action d'un ressort de rappel maintenant ledit montant en appui contre ladite surface.

La came peut aussi être reliée à l'arbre de sortie d'un moto-réducteur, pour permettre une commande électrique de l'inclinaison du coussin.

Des modes d'exécution de l'invention vont maintenant être décrits à titre d'exemples nullement limitatifs, avec référence aux autres figures du dessin annexé dans lequel :
- la figure 3 représente en perspective l'ensemble des armatures d'un dossier de siège arrière conforme à l'invention, les coussins d'appui pour le dos étant supposés retirés ;
- les figures 4a et 4b sont des vues partielles en perspective, montrant deux positions différentes de l'organe rotatif à surface d'appui excentrique, un montant du cadre mobile de coussin étant en appui sur cette surface ;
- la figure 5 est une vue partielle montrant en élévation un système bistable propre à maintenir un cadre mobile de coussin dans deux positions d'inclinaison différentes ;
- la figure 6 montre schématiquement en perspective un moto-réducteur pour la commande électrique de ladite inclinaison ;
- les figures 7 à 9 montrent en perspective trois différents montages d'un cadre mobile de coussin sur l'armature fixe de l'ensemble du dossier ; et
- la figure 10 est une vue en perspective du dossier de siège arrière montrant une liaison possible entre la coiffe de la matelassure du dossier et le cadre mobile de coussin.

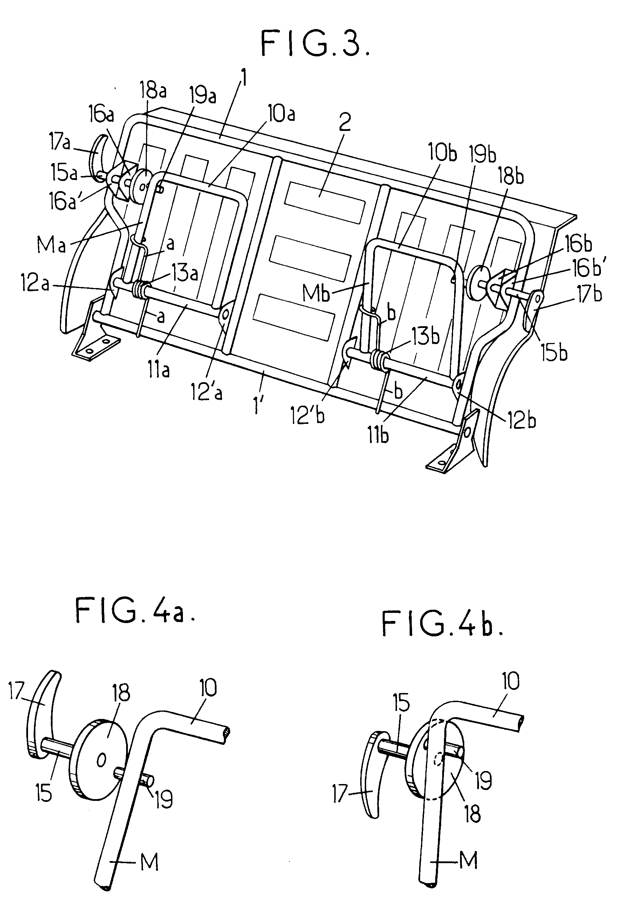

Sur la figure 3, l'armature fixe de l'ensemble du dossier de siège arrière pour véhicule a été référencée 1. Il peut s'agir par exemple d'un cadre métallique tubulaire complété par une tôle d'appui 2. Ce dossier étant supposé destiné à comporter deux coussins d'appui mobiles indépendamment l'un de l'autre, est pourvu de deux cadres mobiles pour de tels coussins, référencés 10a, 10b. Ces cadres, également métalliques et tubulaires, possèdent un axe de pivotement, respectivement 11a, 11b, dont les extrémités sont supportées par des paliers de l'armature fixe, référencés respectivement 12a, 12'a et 12b, 12'b. Sur les axes 11a, 11b sont montés deux ressorts hélicoïdaux, respectivement 13a, 13b, tendus par mise en appui de leurs branches a, b sur la barre inférieure 1' de l'armature fixe d'une part, et sur un montant Ma, Mb du cadre mobile correspondant, d'autre part, de sorte que les cadres mobiles 10a, 10b soient constamment rappelés vers l'arrière, leur position arrière extrême étant atteinte lorsqu'ils sont en appui contre la tôle 2 de l'armature fixe.

Pour régler la position des cadres mobiles 10a, 10b autour de leur axe respectif 11a, 11b, on peut utiliser des cames dont la surface excentrique serait en appui sous les montants Ma et Mb, et que l'on pourrait faire tourner grâce à une poignée, ou grâce à un moto-réducteur.

On peut également utiliser, en tant que cames, des organes rotatifs ayant la forme de disques 18 et dont la surface d'appui excentrique serait fournie par un pion excentré 19, comme ceci a été représenté sur les vues partielles plus détaillées des figures 4a et 4b. Une poignée 17 et un axe 15 permettent de faire tourner le disque 18, et donc de modifier la position du montant M de chaque cadre mobile, ce montant étant maintenu en appui contre le pion 19 par le ressort de rappel correspondant (13a ou 13b).

Sur la figure 3, ce mécanisme a été représenté pour les deux cadres mobiles 10a, 10b, avec les mêmes références accompagnées de l'indice a pour la partie droite ou de l'indice b pour la partie gauche ; on y a représenté en outre les paliers 16a, 16a' et 16b, 16b' des axes 15a et 15b, respectivement, paliers qui ne sont pas représentés sur les figures 4a et 4b et qui sont solidaires de l'armature fixe 1.

On a montré pour la partie droite du dossier (correspondant à la position de la figure 4a) le cadre 10a dans sa position la plus en arrière, c'est-à-dire en appui sur la tôle 2, et pour la partie gauche du dossier (correspondant à la position de la figure 4b) le cadre 10b dans sa position la plus en avant, avec un réglage possible dans toutes les positions intermédiaires, grâce, par exemple, à un frottement au niveau des paliers des axes 15.

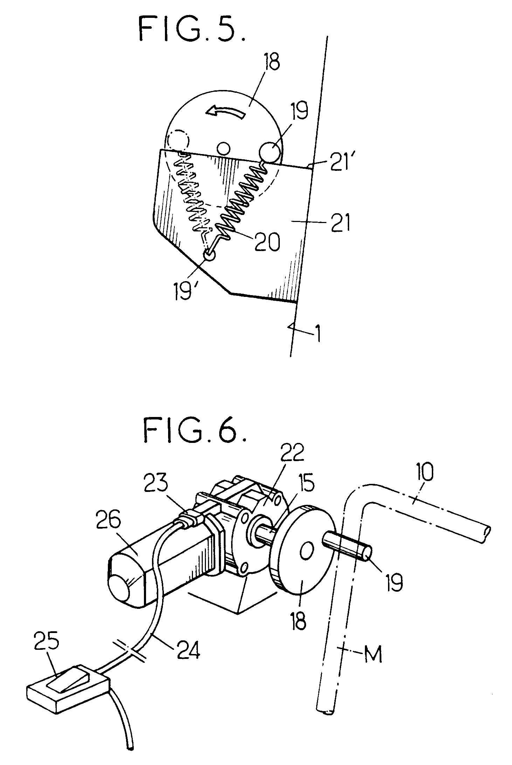

On peut aussi prévoir un positionnement bistable, grâce au dispositif représenté à la figure 5. Dans ce cas, un ressort de rappel 20 est tendu entre le pion précité 19 du disque 18 et un trou 19' d'une potence 21 solidaire de l'armature fixe 1. Ainsi le pion 19 peut passer de la position arrière représentée en trait plein à la figure 5, à la position avant représentée en tirets, étant dans ces deux positions en appui sur une surface de butée 21' de la potence 21. Ces deux positions correspondent respectivement à une position en retrait de la partie supérieure du cadre mobile 10 de coussin, et à une position extraite de cette partie supérieure, ce qui donne à l'occupant du siège le choix entre ces deux positions du coussin.

A la figure 6 on a représenté une variante à commande par moto-réducteur électrique. Dans ce cas, l'arbre de sortie du réducteur 22 est calé sur l'axe précité 15, pour entraîner en rotation le disque 18 porteur du pion excentré 19. Le moteur électrique a été référencé 26. Il est alimenté par un cordon électrique 24 branché sur un connecteur 23 du moteur et sur lequel est monté un interrupteur de commande 25 à deux positions. Grâce à cet interrupteur, l'occupant du siège peut mouvoir le coussin mobile dans un sens ou dans l'autre, selon le sens de rotation dans lequel est entraîné le disque 18. Le moto-réducteur étant par nature irréversible, il n'est plus besoin de ressort de rappel bistable 20, et on peut ainsi obtenir un réglage continu de l'inclinaison du cadre mobile 10 entre ses deux positions extrêmes.

Un autre avantage de ce mode de réalisation réside dans le fait que l'interrupteur 25 peut être implanté en l'emplacement du véhicule qui paraîtra le plus ergonomique.

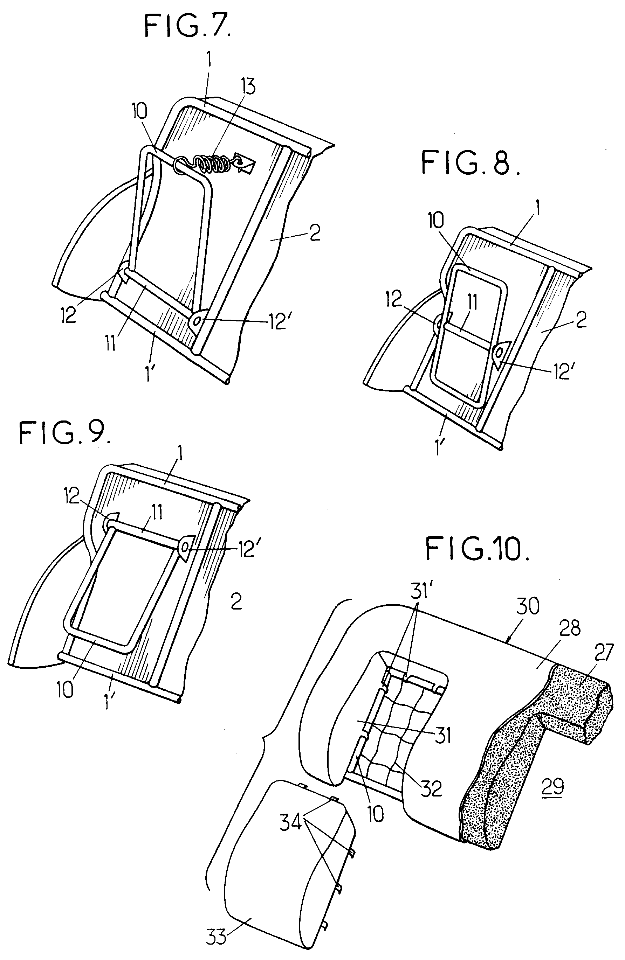

La commande manuelle ou électrique qui vient d'être décrite peut être utilisée également avec les modes de réalisation des figures 7 à 9, avec l'axe d'articulation 11 du cadre mobile 10 situé à la partie inférieure de ce dernier (figure 7), à sa partie centrale (figure 8), ou à sa partie supérieure (figure 9), cet axe étant à chaque fois monté sur des paliers 12, 12' de la tôle fixe 2. Sur la figure 7 on a montré en outre l'utilisation d'un ressort de traction 13 agissant entre la tôle 2 et une traverse du cadre 10 pour rappeler celui-ci vers l'arrière. Sur ces trois dernières figures, on n'a pas représenté le système de commande par came ou analogue.

Le dossier qui vient d'être décrit peut être équipé des différents éléments de garnissage habituels, tels que nappes métalliques, matelassures et coiffes, en séparant le garnissage des parties extérieures fixes et des parties centrales mobiles.

Comme représenté à la figure 10, par exemple, la garniture périphérique 30 rapportée sur l'armature fixe 1 peut être constituée d'une matelassure 27 (apparaissant dans la partie droite), recouverte d'une coiffe de tissu 28 (visible sur la partie gauche). La matelassure 27 comporte à l'emplacement des coussins mobiles un évidement 29. Des joues 31 de la coiffe 28 tapissent les parois latérales de ces évidements et viennent s'accrocher, par des pattes 31', sur le cadre mobile 10. (Sur la figure 10 on a représenté ce cadre équipé d'une nappe métallique 32).

La figure 10 montre également un bloc de mousse habillé de tissu 33 et rapporté sur le cadre mobile 10, par exemple par des crochets 34, pour terminer l'habillage du dossier.

L'avantage de cette conception est, en reliant la périphérie de la coiffe extérieure 28 aux mouvements du cadre mobile 10, d'avoir des lignes de couture restant l'une en face de l'autre, garantissant ainsi au mieux l'intégrité du style du siège défini par le constructeur. Cette conception implique une élasticité de la matelassure sous-jacente, par exemple par un alvéolage, afin de permettre à la coiffe extérieure de suivre les mouvements du cadre mobile.

Une réalisation plus simple consisterait à attacher les formes de la coiffe 31 directement sur le dossier 1 fixe.

La réalisation générale de l'ensemble permet, en ajustant la forme du cadre 10 à la forme du médaillon défini par le style du constructeur, de s'adapter à toutes les définitions de ces médaillons, en faisant se confondre la séparation entre les parties mobiles et fixe avec la couture destinée à marquer le dessin de ce médaillon.

## Revendications

1. Dossier de siège arrière de véhicule automobile, du type comportant une armature de dossier (1, 2) et une garniture (30), ladite armature possédant au moins un cadre mobile (10), associé à des moyens lui permettant d'être pivoté autour d'un axe horizontal (11), caractérisé en ce que la garniture comporte une matelassure fixe (27) munie d'au moins un évidement dans lequel se loge un coussin (33) lié au cadre mobile, et en ce que ledit cadre de coussin (10) possède un axe horizontal (11) dont les extrémités sont montées pivotantes dans des paliers respectifs (12, 12') de ladite armature de dossier (1, 2).

2. Dossier selon la revendication 1, caractérisé en ce qu'il comporte, pour chaque cadre mobile (10) de coussin, un organe rotatif (18) à surface d'appui excentrique (19) propre à être manoeuvré de l'extérieur, un montant dudit cadre mobile (10) étant maintenu en appui contre cette surface par un ressort de rappel (13).

3. Dossier selon la revendication 2, caractérisé en ce que ledit organe rotatif (18) est relié à une poignée de commande (17) propre à le faire pivoter.

4. Dossier selon la revendication 2, caractérisé en ce que ledit organe rotatif (18) est relié en rotation à l'arbre de sortie d'un moto-réducteur électrique (22, 26).

5. Dossier selon l'une quelconque des revendications 2 à 4, caractérisé en ce que ladite surface d'appui excentrique est constituée par un pion excentré (19) fixé sur un disque (18) constituant ledit organe rotatif.

6. Dossier selon la revendication 5, caractérisé en ce qu'il comporte un ressort de rappel (20) tendu entre ledit pion excentré (19) et un point d'accrochage (19') d'une potence fixe (21) sur une surface de butée (21') de laquelle ledit pion peut ainsi venir en appui en position arrière ou en position avant, commandant ainsi respectivement une mise en position de retrait de la partie supérieure dudit cadre mobile (10), ou une mise en position extraite de cette partie supérieure.

7. Dossier selon la revendication 6, caractérisé en ce que ladite coiffe (28) comporte des joues (31) tapissant les parois latérales dudit évidement (29) et accrochées sur le cadre mobile (10).

8. Dossier selon la revendication 6 ou 7, caractérisé en ce que le coussin mobile (33) est rapporté sur le cadre mobile correspondant (10) par des crochets (34).

## Claims

1. Seat back of the rear seat of a motor vehicle, of the type comprising a seat back structure (1, 2) and upholstery (30), the said structure having at least one mobile frame (10) associated with means enabling it to be pivoted about a horizontal shaft (11), characterised in that the upholstery comprises a fixed padding (27) provided with at least one recess which accommodates a cushion (33) connected to the mobile frame and in that the said cushion frame (10) has a horizontal shaft (11) of which the ends are pivotably mounted in respective bearings (12, 12') of the said seat back structure (1, 2).

2. Seat back according to claim 1, characterised in that it comprises, for each mobile cushion frame (10), a rotating member (18) having an eccentric support surface (19) which can be manoeuvred from the outside, a strut of the said mobile frame (10) being held supported against that surface by a return spring (13).

3. Seat back according to claim 2, characterised in that the said rotating member (18) is connected to a control handle (17) capable of causing it to pivot.

4. Seat back according to claim 2, characterised in that the said rotating member (18) is connected in rotation to the output shaft of an electrical reducing gear motor (22, 26).

5. Seat back according to any one of claims 2 to 4, characterised in that the said eccentric support surface is formed by an eccentric pin (19) secured to a disc (18) constituting the said rotating member.

6. Seat back according to claim 5, characterised in that it comprises a return spring (20) tensioned between the said eccentric pin (19) and an attachment point (19') of a fixed bracket (21), on an abutment surface (21') of which the said pin can thus be supported in a rear or front position, thus controlling, respectively, the movement of the upper portion of the said mobile frame (10) into a retracted position or a movement of that upper portion into the pulled-out position.

7. Seat back according to claim 6, characterised in that the said cover member (28) comprises cheeks (31) which cover the side walls of the said recess (29) and are attached to the mobile frame (10).

8. Seat back according to claim 6 or 7, characterised in that the mobile cushion (33) is mounted on the corresponding mobile frame (10) by means of hooks (34).

## Patentansprüche

1. Rückenlehne des Rücksitzes eines Kraftfahrzeuges, die aus einem Gestell (1, 2) und einer Ausstattung (30) besteht, wobei das Gestell wenigstens einen beweglichen Rahmen (10) enthält, der mit Einrichtungen verbunden ist, mit denen er um eine waagerechte Achse (11) verschwenkt werden kann, dadurch gekennzeichnet, daß die Ausstattung ein festes Polster (27) enthält, das mit wenigstens einer Ausnehmung versehen ist, in die ein Polsterkissen (33) eingesteckt ist, das mit dem beweglichen Rahmen verbunden ist, und daß der Rahmen des Polsterkissens (10) eine waagerechte Achse (11) besitzt, deren Enden schwenkbar in entsprechenden Lagern (12, 12') des Gestells (1, 2) der Rückenlehne befestigt sind.

2. Rückenlehne nach Anspruch 1, dadurch gekennzeichnet, daß jeder bewegliche Rahmen (10) eines Polsterkissens ein Drehteil (18) mit exzentrisch angeordneter Stützfläche (19) enthält, das von außen betätigt werden kann, wobei ein Träger des beweglichen Rahmens (10) mit einer Rückstellfeder (13) abstützend gegen diese Stützfläche gedrückt wird.

3. Rückenlehne nach Anspruch 2, dadurch gekennzeichnet, daß das Drehteil (18) mit einem Betätigungsgriff (17) verbunden ist, mit dem es verschwenkt werden kann.

4. Rückenlehne nach Anspruch 2, dadurch gekennzeichnet, daß das Drehteil (18) drehbar mit der Ausgangswelle eines Getriebemotors (22, 26) verbunden ist.

5. Rückenlehne nach einem der Ansprüche 2 bis 4, dadurch gekennzeichnet, daß die exzentrische Stützfläche aus einem exzentrisch angeordneten Zapfen oder Pion (19) besteht, der an einer Scheibe (18) befestigt ist, die das Drehteil bildet.

6. Rückenlehne nach Anspruch 5, dadurch gekennzeichnet, daß sie eine Rückstellfeder (20) enthält, die zwischen dem exzentrisch angeordneten Zapfen (19) und einer Befestigungsstelle (19') an einem festen Arm (21) mit einer Anschlagfläche (21') verspannt ist, auf der sich der Zapfen somit in einer hinteren oder vorderen Position abstützen und auf diese Weise eine eingezogene Stellung des oberen Teils des beweglichen Rahmens (10) oder eine ausgefahrene Stellung dieses oberen Teils steuern kann.

7. Rückenlehne nach Anspruch 6, dadurch gekennzeichnet, daß der Bezugsstoff (28) des Polsters (27) Seitenteile (31) besitzt, die die seitlichen Wände der Ausnehmung (29) bedecken und an dem beweglichen Rahmen (10) befestigt sind.

8. Rückenlehne nach den Ansprüchen 6 oder 7, dadurch gekennzeichnet, daß das bewegliche Polsterkissen (33) an dem zugehörigen beweglichen Rahmen (10) mittels Klammern (34) befestigt ist.
